# EUROPÄISCHE PATENTSCHRIFT

(11) **EP 1 637 473 B1**
(45) Veröffentlichungstag und Bekanntmachung des Hinweises auf die Patenterteilung: **24.09.2014**
(21) Anmeldenummer: 05108329.3
(22) Anmeldetag: 12.09.2005
(51) Int. Cl.: B65D 90/10, A01M 7/00

(54) **Tank für eine landwirtschaftliche Feldspritze**
Tank for an agricultural field sprayer
Cuve pour un pulvérisateur agricole

(30) Priorität: 15.09.2004 DE 102004045078
(43) Veröffentlichungstag der Anmeldung: 22.03.2006
(73) Patentinhaber: John Deere Fabriek Horst B.V., 5961 PT Horst (NL)
(72) Erfinder: Beeren, Joseph Marie Henrie, 5961 SB, Horst (NL); Peeters, Willy, 5825 CD, Overloon (NL)
(74) Vertreter: Holst, Sönke

(56) Entgegenhaltungen:
- CH-A- 245 876
- DE-A1- 2 240 351
- DE-A1- 3 700 130
- DE-A1- 3 921 089
- DE-U1- 8 705 113
- DE-U1- 29 804 894
- US-A- 4 315 579
- US-A1- 2002 185 180

## Beschreibung

Die Erfindung betrifft einen Tank für eine landwirtschaftliche Feldspritze mit einem am Tank ausgebildeten Einfüllbereich, der eine am Tank ausgebildete Öffnung aufweist, und einem den Einfüllbereich abschließenden ersten Verschluss, wobei der erste Verschluss eine mit einem zweiten Verschluss versehene Öffnung und wenigstens einen mit einer Leitung verbindbaren Anschluss aufweist, wobei der Einfüllbereich einen ersten Teilbereich und wenigstens einen zweiten Teilbereich aufweist, wobei ein Bereich des ersten Teilbereichs von der Öffnung zugänglich und durch den zweiten Verschluss abgedeckt ist, wobei der zweite Teilbereich zu der Öffnung und/oder zu dem ersten Teilbereich abgeschirmt und durch den ersten Verschluss vollständig abgedeckt ist und wobei in dem Einfüllbereich wenigstens eine Trennwand ausgebildet ist, die den ersten Teilbereich von dem wenigstens zweiten Teilbereich abtrennt und den ersten Teilbereich gegenüber dem zweiten Teilbereich seitlich abschirmt.

Im Stand der Technik sind Tanks bekannt, beispielsweise Tanks für landwirtschaftliche Spritzen, insbesondere Feldspritzen, die über einen mit einer Öffnung versehenen Einfüllbereich verfügen, über welche der Tank mit zu versprühendem Spritzmittel, wie zum Beispiel Chemikalien in Form von Granulat oder Pulver, befüllbar ist. Die Öffnung ist in der Regel mit einem Verschluss bzw. Deckel versehen, beispielsweise einem Klappdeckel, der von einer Bedienperson zu öffnen ist. Der Einfüllbereich wird üblicherweise mit einer Befüllleitung versorgt, mittels derer eine Trägerflüssigkeit, beispielsweise Wasser, zum Einspülen des Spritzmittels in den Tank geleitet wird. Des Weiteren kann auch eine Rückführleitung, Spülleitung und dergleichen, vorgesehen sein. Um aufwändige Anschlüsse für die Leitungen am Tank selbst zu vermeiden, ist es bekannt, die Anschlüsse direkt am Deckel vorzunehmen.

Ein derartiger Tank wird in der DE 39 21 089 A1 offenbart. Es wird eine landwirtschaftliche Feldspritze beschrieben, die einen Tank aufweist, der über eine mit einem Deckel versehene Einfüllöffnung verfügt. Um auf einfache Weise Anschlüsse für eine Befüllleitung und für eine Rückführleitung anzuordnen, wird vorgeschlagen, die Anschlüsse am Deckel vorzusehen. Von Nachteil dabei ist, dass für einen Einfüllvorgang an der Einfüllöffnung ein Öffnen des Deckels nur möglich ist, wenn Befüllleitung und Rückführleitung geschlossen bzw. die Leitungen vom Deckel entfernt werden. Zum Ein- bzw. Nachfüllen von Spritzmittel muss beispielsweise auch ein Spritzflüssigkeitskreislauf, der über die Rückführleitung geführt wird, für den Einfüllvorgang unterbrochen werden. Ein Betrachten eines Einspülvorgangs von Spritzmittel oder auch eines Ausspülvorgangs des Tanks ist durch die Einfüllöffnung nicht möglich.

Die CH 245876 A offenbart eine Apparatur für ein Messgefäß zum Befüllen eines Tanks mit Spritzmittel. Die Apparatur weist einen Verschlussdeckel auf, der mit einer Gewindeöffnung zum Anbringen des Messgefäßes versehen ist, wobei der Verschlussdeckel einen neben der Öffnung angeordneten Anschluss für einen Spritzwasserschlauch aufweist. Ein Betrachten und Kontrollieren des Befüllvorgangs ist hierbei nicht möglich.

Ferner offenbart die DE 2240351 A1 einen Verschlussdeckel für Lagertanks, der eine als Mannloch ausgebildete Öffnung aufweist, wobei die in den Tank führenden Leitungen am Verschlussdeckel eingeführt sind. Ein die Öffnung abdeckender Mannlochdeckel kann geöffnet werden, ohne dass die Leitungen davon berührt werden. Beim Öffnen des Deckels und gleichzeitigem Betreiben der Leitungen könnte Spritzflüssigkeit aus der Öffnung treten und eine Bedienperson gefährden.

Die DE 87 05 113 U1 weist einen Tank auf, der einen Einfüllbereich aufweist. Der Einfüllbereich ist mit einem ersten Verschlussdeckel verschlossen, in welchem mehrere Anschlüsse und eine Öffnung angeordnet sind. Die Öffnung im ersten Verschlussdeckel ist mit einem zweiten Verschlussdeckel verschlossen. Die Öffnung im ersten Verschlussdeckel, führt in einen vom Einfüllbereich des Tanks abgetrennten Bereich, der als Tauchrohr ausgebildet ist.

Die der Erfindung zugrunde liegende Aufgabe wird darin gesehen, einen Tank der eingangs genannten Art anzugeben, durch welchen ein oder mehrere der vorgenannten Probleme überwunden werden. Insbesondere soll es einer Bedienperson ohne Gefährdung durch aufspritzende Flüssigkeit ermöglicht werden einen Einspülvorgang für Spritzmittel bzw. einen Ausspülvorgang oder Reinigungsvorgang für den Tank zu betrachten bzw. zu kontrollieren.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Tank der eingangs genannten Art derart ausgebildet, dass sowohl der erste als auch der zweite Teilbereich von der Öffnung des Einfüllbereichs aus zugänglich sind und wenigstens einer der auf dem ersten Verschluss angeordneten Anschlüsse in den ersten Teilbereich führt.

Der erste Verschluss kann als Platte oder als Haube ausgebildet sein, wobei sowohl eine kastenförmige oder gewölbte Ausbildung der Haube in Frage käme. Der Verschluss deckt dabei den Einfüllbereich des Tanks ab und stellt dabei eine den Tank verschließende und abdichtende Abdeckung dar. Der zweite Verschluss deckt eine Öffnung ab, die einen Zugang zum Einfüllbereich des Tanks darstellt und als Einfüllöffnung für Flüssigkeit oder Spritzmittel, wie beispielsweise Pflanzenschutz- oder Schädlingsbekämpfungsmittel in Flüssigkeits-, Granulat- oder Pulverform, dient. Der erste Verschluss ist mit wenigstens einem Anschluss versehen, an dem eine Leitung zum Fördern einer Flüssigkeit, die im Tank aufgenommen bzw. mit der der Tank befüllt wird. Hierbei können auch mehrere Anschlüsse vorgesehen sein, die jeweils oder gemeinsam mit einer Leitung verbunden sind, so dass gleichzeitig oder in zeitlicher Abfolge Flüssigkeit zum Befüllen, Rückführen, Spritzen, Ausspülen, Einspülen etc. gefördert werden kann und über die Anschlüsse in den Einfüllbereich geleitet wird. Dabei kann unabhängig von der Inbetriebnahme einer Leitung bzw. unabhängig von einem Fördervorgang in einer Leitung der zweite Verschluss geöffnet werden, so dass in jeder Situation ein Zugang zum Einfüllbereich, beispielsweise zum Nachfüllen von Spritzmittel oder zur Kontrolle eines Einspül- oder Ausspülvorgangs, gewährleistet ist. Insbesondere ein Zirkulationsvorgang, der beispielsweise die Flüssigkeit innerhalb eines Spritzensystems in einem stetigen Kreislauf halten soll, um Ablagerungen zu vermeiden, muss beim Öffnen des zweiten Verschlusses nicht unterbrochen werden. Von besonderem Vorteil ist, dass die Fertigung von Anschlüssen auf wesentlich einfachere und kostengünstigere Weise am Verschluss erfolgen kann, als am Tank. So kann beispielsweise gänzlich auf die Anordnung von Anschlüssen am Tank verzichtet werden und durch den modularen Aufbau von Verschluss und Tank verschiedene Kombinationen von Anschlüssen und somit unterschiedliche Spritzenkonfigurationen für ein und denselben Tank auf kostengünstige Weise realisierbar sind. Der erste Teilbereich ist von der Öffnung zugänglich und dient vorzugsweise zum Einfüllen bzw. Einspülen von Spritzmittel in den Tank. Der zweite Teilbereich ist von der Öffnung und dem ersten Teilbereich abgeschirmt, so dass gleichzeitig zum Einfüll- bzw. Einspülvorgang ein Fördern von Flüssigkeit in den zweiten Teilbereich erfolgen kann, ohne dass der erste Teilbereich davon beeinflusst wird. Somit kann beispielsweise Spritzmittel nachgefüllt werden, während die Zirkulationseinrichtung betrieben wird, ohne dass eine Bedienperson mit aufspritzender oder aufgewirbelter Flüssigkeit aus dem zweiten Teilbereich in Berührung kommt. Ferner kann ohne Gefährdung der Bedienperson beispielsweise ein Einspülvorgang für Spritzmittel bzw. ein Ausspülvorgang oder Reinigungsvorgang für den Tank von der im ersten Verschluss ausgebildeten Öffnung aus betrachtet und kontrolliert werden. Ferner ist es möglich, den Einfüllbereich mit weiteren Teilbereichen auszubilden, so dass verschiedene Teilbereiche für verschiedene Vorgänge vorgesehen sind. In dem Einfüllbereich kann eine Trennwand eingefügt sein, die die vorhandenen Teilbereiche voneinander abschirmt, so dass Flüssigkeit aus dem einen Teilbereich nicht in den anderen Teilbereich gelangt. Die Trennwand kann beispielsweise als Steg ausgebildet sein, der sich quer zum Einfüllbereich und senkrecht zum ersten Verschluss ins Tankinnere erstreckt und seitlich zu der im ersten Verschluss vorgesehenen Öffnung angeordnet ist. In einer anderen Ausführungsform kann die Trennwand auch als ein sich senkrecht zum ersten Verschluss ins Tankinnere erstreckender und die Öffnung umschließender Zylinder oder Trichter ausgebildet sein.

In einer weiteren Ausführungsform ist der erste und/oder der zweite Teilbereich als Becken ausgebildet, so dass in einen Teilbereich einfließende Flüssigkeit zunächst aufgefangen wird und dann beruhigt in den Tank abfließen kann. Ein ausgebildetes Becken stellt des Weiteren eine wirksame Abschirmung bzw. eine weitestgehend vollständige Trennung von einem benachbarten Teilbereich des Einfüllbereichs dar. Ein als Becken ausgebildeter Teilbereich kann fest oder lösbar mit dem Tank oder mit dem ersten Verschluss verbunden sein. Beispielsweise kann ein Teilbereich mit dem Tank oder dem ersten Verschluss verklebt, verschweißt oder auch verschraubt sein. Denkbar ist es auch den Teilbereich zusammen mit dem Tank oder dem ersten Verschluss in gegossener Form, insbesondere im Spritzgießverfahren, oder als Umformteil, beispielsweise als Tiefziehteil, auszubilden. Dabei können für den Tank und für den Verschluss Materialien wie Kunststoff oder Metall oder andere gießbare und umformbare Materialien verwendet werden.

Ein Teilbereich kann auch als Einsatzelement, beispielsweise in Form eines vorgefertigten Beckens ausgebildet sein, welches in den Einfüllbereich einsetzbar ist. Dazu kann das Becken beispielsweise mit einem überstehenden Rand ausgestattet sein, welcher auf dem Rand der im ersten Verschluss vorgesehenen Öffnung aufliegt. Hierbei ist es denkbar, ein Einsatzelement auch auf einem für den ersten Verschluss vorgesehenen Rand zu platzieren, so dass der Rand des Einsatzelements zwischen dem ersten Verschluss und dem Tank eingespannt bzw. fixiert ist. Die Einsatzelemente können in unterschiedlichen Formen und Varianten ausgebildet werden, so dass beispielsweise auch mehrere Einsatzelemente in den Einfüllbereich einsetzbar sind, um mehrere verschiedene Teilbereiche gestalten zu können, die mit unterschiedlichen Volumina und Formen ausgebildet sind. Die Ausbildung derartiger Einsatzelemente zur variablen Gestaltung von Teilbereichen eines Einfüllbereichs kann hierbei auch als eigenständige Erfindung angesehen werden.

Ein Teilbereich ist vorzugsweise mit einem Sieb oder Filter versehen. Das Sieb oder Filter kann dazu dienen, durch den Teilbereich fließende Flüssigkeit zu filtern, damit keine Verunreinigungen in das Spritzensystem gelangen. Ferner dient es dazu, beispielsweise während des Einspülvorgangs einzuspülendes Spritzmittel in Form von Granulat oder Pulver zu deponieren, um es gleichmäßig in die Trägerflüssigkeit einspülen zu können. Die Abflussöffnungen der Teilbereich können nach Bedarf dementsprechend unterschiedlich groß ausgebildet sein, um entsprechende Siebe oder Filter aufnehmen zu können. So kann eine Abflussöffnung im ersten Teilbereich wesentlich größer ausfallen als eine Abflussöffnung im zweiten Teilbereich, da im ersten Teilbereich oftmals ein relativ großes Sieb zur Deponierung und Einspülung des Spritzmittels erforderlich ist.

Die am ersten Verschluss vorgesehenen Anschlüsse für Leitungen des Spritzensystems führen vorzugsweise in einen der Teilbereiche. Dabei können ein Teil der Anschlüsse in einen und ein weiterer Teil der Anschlüsse in einen anderen Teilbereich führen. Hierbei ist es auch denkbar, dass einige Anschlüsse unterhalb des ersten Verschlusses direkt in den Tank führen, indem die Teilbereiche durch Leitungen umgangen werden. So kann beispielsweise, durch entsprechende Ausbildung der Teilbereiche und der Anschlüsse, ein Anschluss in den ersten Teilbereich zum Einfüllen von Trägerflüssigkeit beim Einspülvorgang führen. Ein weiterer Anschluss kann in den zweiten Teilbereich führen, der zum Einfüllen einer anderen Flüssigkeit oder zum Rückführen von Spritzflüssigkeit dient. Wiederum ein weiterer Anschluss kann zwischen den Teilbereichen direkt in den Tank führen, beispielsweise, wenn die rückgeführte Spritzflüssigkeit ungefiltert und unberuhigt in den Tank fließen soll.

Der erste Verschluss kann durch eine lösbare Verbindung, beispielsweise durch Verschrauben oder durch eine Presspassung mit dem Tank verbunden sein. Dies hat den Vorteil, dass beispielsweise ein und derselbe erste Verschluss an verschiedenen Tanks, beispielsweise unterschiedlicher Größe, eingesetzt werden kann. Bei der Verwendung von Einsatzelementen, die zwischen dem ersten Verschluss und dem Tank eingespannt und fixiert werden, können diese beispielsweise ausgetauscht und ersetzt werden, so dass mehrere Varianten von Teilbereichen mit einem Spritzensystem möglich sind.

Der erste und/oder zweite Verschluss kann auf vielfältige Art und Weise ausgebildet sein. So kann er beispielsweise als Bajonettverschluss ausgebildet sein, der mit einem entsprechend ausgebildeten Rand einer am Tank bzw. der am ersten Verschluss ausgebildeten Öffnung in Eingriff tritt. Ferner ist es auch möglich einen Spannverschluss mit Spannbügeln zu verwenden oder den Verschluss und die Öffnung mit einem entsprechenden Gewinde zu versehen. Der Verschluss kann aber auch als Kappe ausgebildet sein und mit einer entsprechenden Passung über einen vorstehenden Rand gestülpt werden. Des Weiteren ist es denkbar, den Verschluss als Schieber auszubilden, der durch Verschieben in einer entsprechenden Führung eine Öffnung freigibt. Des Weiteren kann der Verschluss auch als einfacher Deckel, mit oder ohne Klappscharnier, ausgebildet sein, der gegebenenfalls durch eine Aufklappsicherung, wie z. B. einem Riegel, einer Presspassung, einem Spannbügel, einem Spannring, einer Verschraubung, einem Stecker, einem Sicherungsstift etc. gesichert ist. Die Form des Verschlusses kann ebenfalls vielfältig ausfallen. Vorzugsweise ist der Verschluss kreisförmig bzw. rund ausgebildet, jedoch sind auch Ausführungen in eckiger oder ovaler Form denkbar.

Eine kreisförmige bzw. runde Ausbildung des Einfüllbereichs und des ersten Verschlusses hat den Vorteil, dass insbesondere die Fertigung des Verschlusses im Hinblick auf einen Verschließmechanismus, wie beispielsweise einem Bajonettverschluss oder einem Gewinde, auf vielfältige Weise durchführbar ist. Bei Klapp- oder Spanndeckeln bzw. Kappen können jedoch auch eckige oder ovale Formen von Vorteil sein. Durch eine exzentrische Anordnung der Öffnung im ersten Verschluss wird ein sich zu einer Seite des ersten Verschlusses verbreitender ringförmiger Bereich geschaffen, in dem die Anschlüsse vorteilhaft angeordnet werden können.

Vorzugsweise sind die Anschlüsse um die am ersten Verschluss vorgesehene Öffnung auf einen Teilumfang der Öffnung verteilt angeordnet. Dadurch kann die Größe des ersten Verschlusses vorteilhaft gering gehalten werden. Es ist aber auch möglich, eine Anhäufung von Anschlüssen auf einen nicht entlang des Teilumfangs verlaufenden Bereich anzuordnen, beispielsweise, wenn mehrere Teilbereiche vorgesehen sind und nur ein sehr begrenzter Teil des ringförmigen Bereichs einen entsprechenden Teilbereich des Einfüllbereichs abdeckt.

Die an dem ersten Verschluss vorgesehenen Anschlüsse sind mit Leitungen verbunden, die wenigstens eine Rückführleitung und/oder Spülleitung und/oder Befüllleitung und/oder Spritzleitung eines Spritzensystems umfassen. Dabei können mehrere gleichartige Leitungen vorgesehen sein, die mit einem oder mehreren Anschlüssen verbunden sind. Es kann aber auch vorgesehen sein, dass jeder Anschluss nur mit einer Art von Leitung verbunden wird.

Ein erfindungsgemäßer Tank der vorangehend beschriebenen Art kann auf vorteilhafte Weise mit einer Vielzahl von Spritzensystemen kombiniert werden. Insbesondere eignet sich ein derartiger Tank für landwirtschaftliche Feldspritze, wie z. B. Anbauspritzen oder Anhängespritzen für landwirtschaftliche Schlepper oder selbstfahrende Spritzen.

Anhand der Zeichnung, die ein Ausführungsbeispiel der Erfindung zeigt, werden nachfolgend die Erfindung sowie Vorteile und vorteilhafte Weiterbildungen und Ausgestaltungen der Erfindung näher beschrieben und erläutert.

Es zeigt:
- Fig. 1: eine schematische Seitenansicht einer landwirtschaftliche Feldspritze mit einem erfindungsgemäßen Tank,
- Fig. 2: eine schematische perspektivische Ansicht des Tanks aus Figur 1,
- Fig. 3: eine vergrößerte Ansicht des Tanks aus Fig. 2 mit offenem Einfüllbereich,
- Fig. 4: eine vergrößerte Ansicht des Tanks aus Fig. 2 mit geschlossenem Einfüllbereich und
- Fig. 5: eine Draufsicht eines offenen Einfüllbereichs in einer alternativen Ausführungsform.

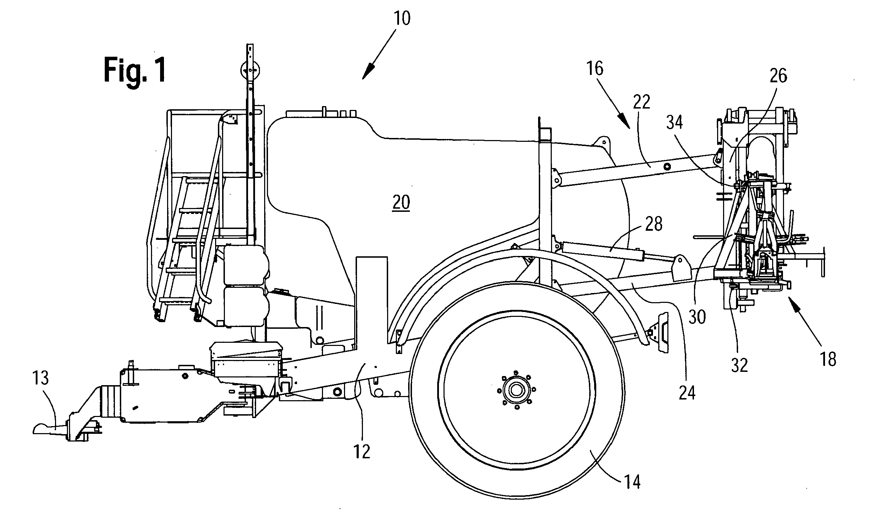

In Figur 1 ist eine landwirtschaftliche Feldspritze 10 in Form einer Anhängespritze für einen landwirtschaftlichen Schlepper (nicht gezeigt) dargestellt.

Die Feldspritze 10 umfasst einen Rahmen 12 mit einer Anhängevorrichtung 13 und Rädern 14, ein Parallelogrammgestänge 16, eine Ausbringvorrichtung 18, sowie einen Tank 20.

Das Parallelogrammgestänge 16 ist schwenkbar an den Rahmen 12 angelenkt und weist einen oberen und einen unteren Lenker 22, 24 auf, die parallel zueinander geführt sind und sich zwischen dem Rahmen 12 und einem parallel geführten Gestängerahmen 26 erstrecken. Zwischen dem oberen Lenker 22 und dem Rahmen 12 erstreckt sich ein Verstellmechanismus in Form eines schwenkbar angelenkten Stellmotors 28, der als Hydraulikzylinder ausgebildet ist und zum Heben und Senken des parallel geführten Gestängerahmens 26 dient.

Die Ausbringvorrichtung 18 weist ein Spritzgestänge 30, mit Ausbringeinheiten 32 auf, die mehrere entlang des Spritzgestänges 30 angeordnete Spritzdüsen umfassen. Das Spritzgestänge 30 weist des Weiteren Verbindungsstreben 34 auf, die mittels Schwenklager schwenkbar mit dem Gestängerahmen 26 verbunden sind (nicht gezeigt). Die Schwenklager sind derart angeordnet, dass die Verbindungsstreben 34 und damit das Spritzgestänge 30 um eine zur Bodenoberfläche vertikale Achse schwenkbar sind. Durch die Schwenklager kann das Spritzgestänge 30 manuell oder durch einen nicht dargestellten Stellmotor in eine Betriebs- und in eine Transportstellung gebracht werden. Das in Figur 1 dargestellte Spritzgestänge 30 befindet sich in Betriebsstellung und erstreckt sich seiner Länge nach quer zur Fahrtrichtung und im Wesentlichen parallel zur Bodenoberfläche. Die Ausbringeinheiten 32 werden über mehrere Leitungen (nicht dargestellt), die sich zwischen dem Tank 20 und der Ausbringvorrichtung 18 sowie entlang des Spritzgestänges 30 erstrecken, mit zu versprühender Flüssigkeit versorgt.

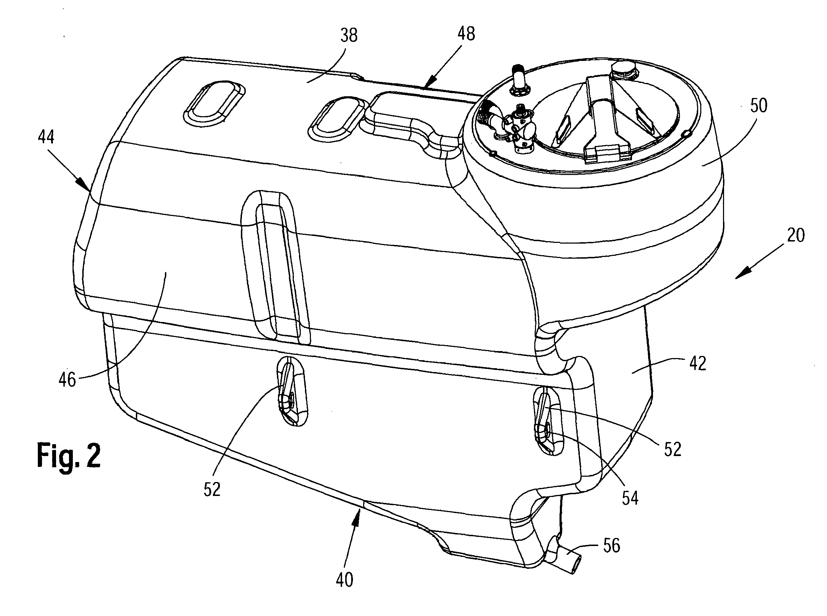

Der Tank 20 (siehe Figur 2) ist im Wesentlichen kastenförmig ausgebildet und weist eine Oberseite 38, eine Unterseite 40, eine Vorderseite 42, eine Hinterseite 44, sowie Seiten 46, 48 auf. In einem vorderen Bereich des Tanks 20 ist ein zylinderförmig ausgebildeter Einfüllbereich 50 angeordnet, der sich senkrecht zur Oberseite des Tanks nach oben und vorne erstreckt und teilweise die Vorderseite 42 und die Oberseite 38 des Tanks 20 überragt. An den Seiten 46, 48 sind sich senkrecht zu den Seiten erstreckende Laschen 52 ausgebildet, die mit Bohrungen 54 versehen sind. Die Laschen 52 dienen zur Montage des Tanks 20 an den Rahmen 14. Ferner weist der Tank 20 an der Unterseite 40 eine Auslassöffnung 56 auf.

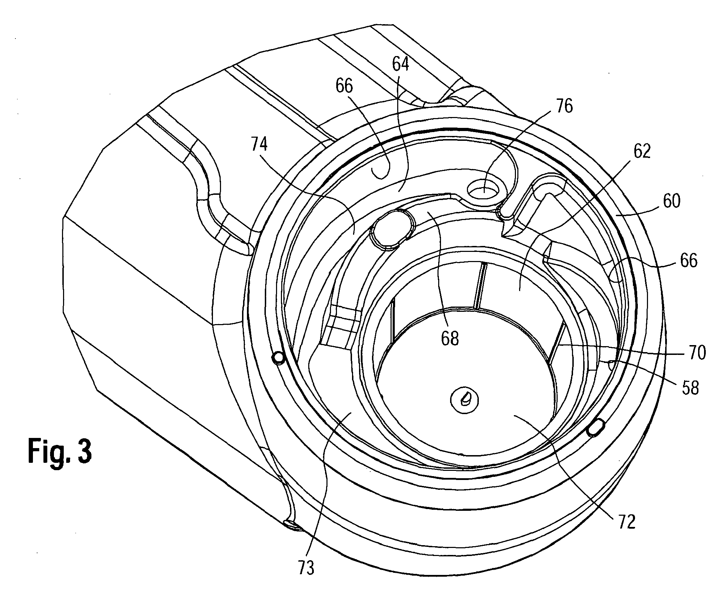

Der Einfüllbereich 50 des Tanks 20 weist eine am Tank 20 ausgebildete Öffnung 58 auf (siehe Figur 3), an der ein kreisförmiger Rand 60 ausgebildet ist. Der Einfüllbereich 50 weist ausgehend vom Rand 60 einen ersten Teilbereich 62 und einen zweiten Teilbereich 64 auf, wobei die Teilbereiche 62, 64 als Becken oder Wannen ausgebildet sind. Die Teilbereiche 62, 64 werden teilweise durch eine kreisförmige Wandung 66 des zylindrischen Einfüllbereichs 50 und teilweise durch eine Trennwand 68 begrenzt. Die Trennwand 68 erstreckt sich bogenförmig quer durch den Einfüllbereich 50, so dass der erste Teilbereich 62 im Wesentlichen kreisförmig oder oval und der zweite Teilbereich 64 im Wesentlichen sichelförmig ausgebildet ist. Die Trennwand 68 schirmt den ersten Teilbereich 62 gegenüber dem zweiten Teilbereich 64 seitlich ab. Der erste Teilbereich 62 ist in Richtung der Unterseite 40 des Tanks 20 mit einer mit einem Sieb 70 versehenen Abflussöffnung 72 versehen, die im Wesentlichen einen gesamten Boden des ersten Teilbereichs 62 einnimmt. Des Weiteren weist der erste Teilbereich 62 eine seitlich zwischen der Abflussöffnung 72 und der Wandung 66 angeordneten Vertiefung 73 versehen. Der zweite Teilbereich 64 weist einen Boden 74 auf, der mit einer Abflussöffnung 76 versehen ist.

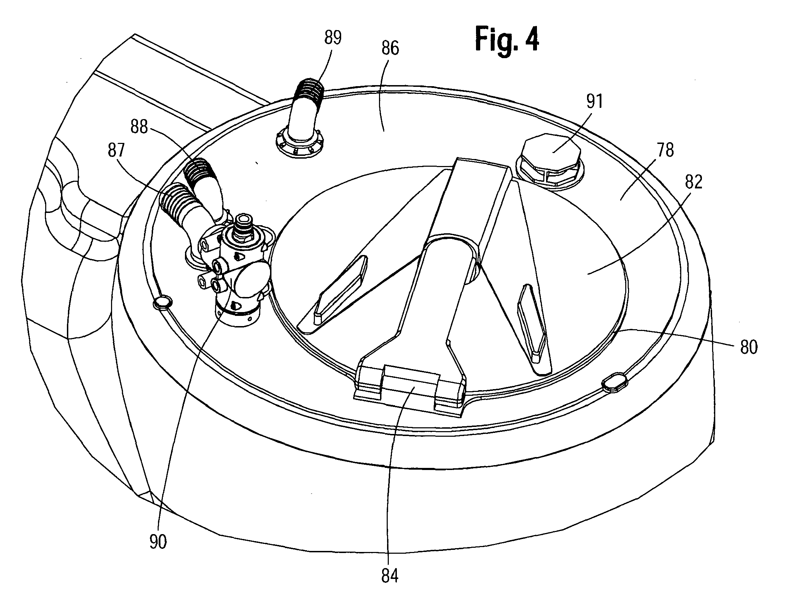

Des Weiteren ist der Tank 20 mit einem ersten Verschluss 78 versehen, wie in Figur 4 dargestellt ist. Der erste Verschluss 78 ist im Wesentlichen als kreisförmige Platte ausgebildet und deckt die gesamte Öffnung 58 des Einfüllbereichs 50 vollständig ab bzw. kommt auf dem an der Öffnung 58 ausgebildeten Rand 60 zur Anlage. Der erste Verschluss 78 wird vorzugsweise mit dem Rand 60 des Einfüllbereichs 50 verschraubt. Dazu sind am Rand des ersten Verschlusses 78 auf den Umfang verteilte Bohrungen vorgesehen (nicht gezeigt), die mit entsprechend angeordneten Gewindebohrungen (nicht gezeigt) am Rand 60 fluchten. Mittels Gewindebolzen (nicht gezeigt) wird eine lösbare Verbindung des ersten Verschlusses 78 mit dem Tank 20 hergestellt. Der erste Verschluss 78 weist eine kreisförmig ausgebildete Öffnung 80 auf (nicht sichtbar), die von einem entsprechend kreisförmig ausgebildeten zweiten Verschluss 82 abgedeckt ist. Der zweite Verschluss ist als Klappdeckel ausgebildet und mittels eines Scharniers 84 mit dem ersten Verschluss 78 an der Öffnung 80 verbunden. Die Öffnung 80 bzw. der zweite Verschluss 82 sind exzentrisch zum ersten Verschluss 78 angeordnet, so dass der erste Verschluss 78 einen Kreisring mit exzentrischem Innenumfang darstellt. Dadurch wird am ersten Verschluss 78 ein sich gleichmäßig erweiternder Anschlussbereich 86 ausgebildet.

Auf dem Anschlussbereich 86 sind mehrere Anschlüsse 87, 88, 89, 90, 91 vorgesehen, die an eine Unterseite des ersten Verschlusses 78 bzw. ins Innere des Einfüllbereichs 50 führen. Die Öffnung 80 ist oberhalb des ersten Teilbereichs 62 (siehe Figur 3) angeordnet und öffnet einen Bereich, der im Wesentlichen nur der Größe der Abflussöffnung 72 entspricht, so dass der verbleibende Teil des Einfüllbereichs 50 durch den ersten Verschluss 78 vollständig abgedeckt ist. Damit ist auch der zweite Teilbereich 64 vollständig durch den ersten Verschluss 78 abgedeckt. Der durch die Öffnung 80 freigegebene Bereich des ersten Teilbereichs 62 wird durch den zweiten Verschluss 82 abgedeckt. Die Anschlüsse 87, 88, 89, 90, 91 können derart auf dem Anschlussbereich 86 angeordnet werden, dass sie entweder in den ersten Teilbereich 62 oder in den zweiten Teilbereich 64 führen. Es ist auch denkbar, einen Anschluss 87, 88, 89, 90, 91 derart anzuordnen, dass er sowohl in den ersten als auch in den zweiten Teilbereich 62, 64 führt. In dem dargestellten Ausführungsbeispiel führen die Anschlüsse 87, 88, 89 in den zweiten Teilbereich 64 und die Anschlüsse 90, 91 in den ersten Teilbereich.

Die Anschlüsse 87, 88, 89 sind beispielsweise mit Rückführleitungen (nicht gezeigt) verbunden, die für eine Zirkulation der zu versprühenden Flüssigkeit sorgen, damit es zu keinen Ablagerungen im Spritzensystem kommt. Der Anschluss 90 dient zum Einspülen von Spritzmittel, welches durch das Sieb 70 filtriert und durch eine Trägerflüssigkeit, beispielsweise Wasser, in das Innere des Tanks 20 gespült wird. Die Trägerflüssigkeit mit dem Spritzmittel wird dabei durch den Anschluss 90 in die Vertiefung 73 geführt und von dort aus durch die Formgebung der Vertiefung 73 beruhigt in das Sieb 70 geführt. Dabei ist es möglich, den Einspülvorgang zu beobachten, indem der zweite Verschluss 82 geöffnet wird, ohne den Zirkulationsprozess unterbrechen zu müssen. Eine Bedienperson ist des Weiteren zuverlässig durch den Anschlussbereich 86 des ersten Verschlusses 78, bzw. durch den die Öffnung 80 umgebenden Teil des ersten Verschlusses 78, und durch die Trennwand 68 gegen aufspritzende Flüssigkeit, die aus den Anschlüssen 87, 88, 89 in den zweiten Teilbereich 64 gelangen, geschützt. Der Anschluss 91 dient zur Entlüftung des Tanks 20.

An dem ersten Verschluss 78 können im Anschlussbereich 86 auch noch weitere Anschlüsse 87, 88, 89, 90, 91 vorgesehen sein, die entsprechend in die Teilbereiche 62, 64 führen. Durch die oben beschriebene Ausgestaltung des Tanks 20 ist es möglich, auf besonders einfache Weise die Anschlüsse 87, 88, 89, 90, 91 am Tank 20 anzuordnen. Insbesondere können die Anschlüsse 87, 88, 89, 90, 91 zuverlässig und einfach abgedichtet werden, da diese beidseitig zugänglich sind. Eine Anordnung von Anschlüssen 87, 88, 89, 90, 91 direkt am Tank 20, wie es im Stand der Technik üblich ist, gestaltet sich oftmals problematisch, insbesondere hinsichtlich der Abdichtung gegen Leckagen. Dadurch, dass die Anschlüsse 87, 88, 89, 90, 91 sowie auch weitere Anschlüsse 87, 88, 89, 90, 91 am ersten Verschluss 78 angeordnet werden können, erleichtert sich insbesondere auch der Fertigungsaufwand für den Tank 20, wobei miteinander verschweißte oder verklebte Teile des Tanks 20 sowie die Verschlüsse 78, 82 vorzugsweise aus Kunststoff hergestellt werden, insbesondere im Spritzgießverfahren. Eine Fertigung durch einzelne umgeformte Blechteile, die anschließend miteinander verschweißt werden, ist ebenfalls möglich.

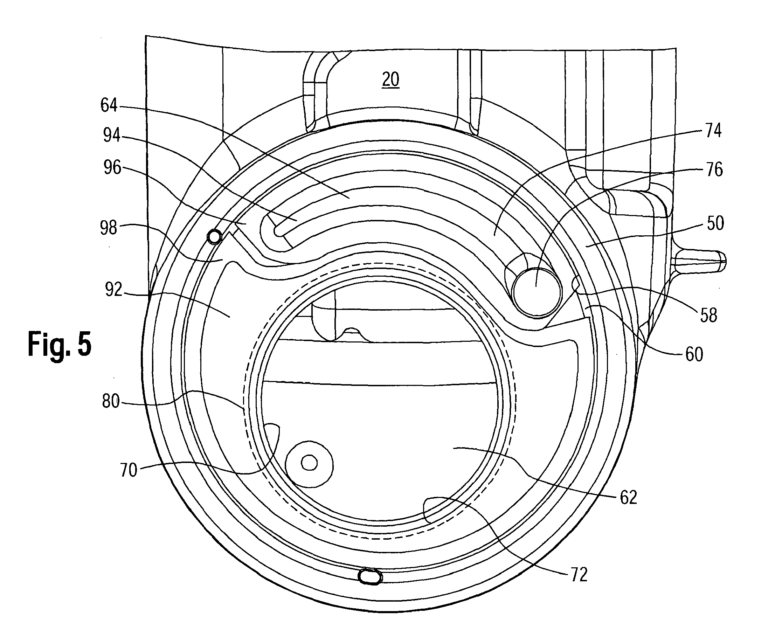

In Figur 5 ist eine alternatives Ausführungsbeispiel der Erfindung dargestellt. Hierbei sind der erste Teilbereich 62 und der zweite Teilbereich 64 als erstes und zweites beckenförmiges oder wannenförmiges Einsatzelement 92, 94 ausgebildet. Die Einsatzelemente 92, 94 weisen dabei im Wesentlichen die gleiche Form auf, wie die beckenförmig oder wannenförmig ausgebildeten ersten und zweiten Teilbereiche 62, 64 aus Figur 3. Das erste Einsatzelement 92 weist entsprechend dem ersten Teilbereich 62 aus Figur 3 einen Boden 74 und eine Abflussöffnung 76 auf. Das zweite Einsatzelement 94 weist entsprechend dem zweiten Teilbereich 64 aus Figur 3 ein Sieb 70 und eine Abflussöffnung 72 auf. Ferner sind an den Einsatzelementen 92, 94 ein überstehender Rand 96 und 98 vorgesehen, mit dem die Einsatzelemente 92, 94 auf dem am Einfüllbereich 50 ausgebildeten Rand 60 zur Anlage kommen, wobei die Ränder 96, 98 so aufeinander abgestimmt sind, dass der eine Rand 96 auf dem anderen Rand 98 aufliegt. Die Einsatzelemente 92, 94 werden anschließend zwischen dem ersten Verschluss 78 und dem Rand 60 eingespannt bzw. zusammen mit dem ersten Verschluss 78 verschraubt. Der Vorteil derartiger Einsatzelemente 92, 94 liegt darin, dass zum einen der Fertigungsprozess für den Tank 20 erheblich vereinfacht werden kann, da eine aufwändige Ausbildung der Teilbereiche 62, 64 im Einfüllbereich 50 entfällt. Zum anderen können verschiedene Konfigurationen erzielt werden, die sich durch in Form und Größe variabel gestaltbare Einsatzelemente 92, 94 ergeben.

Auch wenn die Erfindung lediglich anhand von zwei Ausführungsbeispielen beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Tank für eine landwirtschaftliche Feldspritze (10) mit einem am Tank (20) ausgebildeten Einfüllbereich (50), der eine am Tank (20) ausgebildete Öffnung (58) aufweist, und einem den Einfüllbereich (50) abschließenden ersten Verschluss (78), wobei der erste Verschluss (78) eine mit einem zweiten Verschluss (82) versehene Öffnung (80) und wenigstens einen mit einer Leitung verbindbaren Anschluss (87, 88, 89, 90, 91) aufweist, wobei der Einfüllbereich (50) einen ersten Teilbereich (62) und wenigstens einen zweiten Teilbereich (64) aufweist, wobei ein Bereich des ersten Teilbereichs (62) von der Öffnung (80) zugänglich und durch den zweiten Verschluss (82) abgedeckt ist, wobei der zweite Teilbereich (64) zu der Öffnung (80) und/oder zu dem ersten Teilbereich (62) abgeschirmt und durch den ersten Verschluss (78) vollständig abgedeckt ist und wobei in dem Einfüllbereich (50) wenigstens eine Trennwand (68) ausgebildet ist, die den ersten Teilbereich (62) von dem wenigstens zweiten Teilbereich (64) abtrennt und den ersten Teilbereich (62) gegenüber dem zweiten Teilbereich (64) seitlich abschirmt, **dadurch gekennzeichnet, dass** sowohl der erste als auch der zweite Teilbereich (62, 64) von der Öffnung (58) des Einfüllbereichs (50) aus zugänglich sind und wenigstens einer der auf dem ersten Verschluss (78) angeordneten Anschlüsse (90, 91) in den ersten Teilbereich (62) führt.

2. Tank nach Anspruch 1, **dadurch gekennzeichnet, dass** der erste und/oder der zweite Teilbereich (62, 64) als Becken ausgebildet ist.

3. Tank nach einem oder mehreren der vorhergehenden Ansprüche, **dadurch gekennzeichnet, dass** der erste und/oder zweite Teilbereich (62, 64) eine mit einem Sieb (70) oder Filter versehene Abflussöffnung (72, 76) aufweist.

4. Tank nach einem oder mehreren der vorhergehenden Ansprüche, **dadurch gekennzeichnet, dass** der erste und/oder der zweite Teilbereich (62, 64) als Einsatzelement (92, 94) ausgebildet ist, welches in den Einfüllbereich (50) einsetzbar und mit dem Tank (20) und/oder dem ersten Verschluss (78) verbindbar ist.

5. Tank nach einem oder mehreren der vorhergehenden Ansprüche, **dadurch gekennzeichnet, dass** der wenigstens eine Anschluss (87, 88, 89, 90, 91) in einen der Teilbereiche (62, 64) führt.

6. Tank nach einem oder mehreren der vorhergehenden Ansprüche, **dadurch gekennzeichnet, dass** der erste Verschluss (78) mit dem Tank (20) lösbar verbindbar ist.

7. Tank nach einem oder mehreren der vorhergehenden Ansprüche, **dadurch gekennzeichnet, dass** der erste und/oder zweite Verschluss (78, 82) als Bajonettverschluss ausgebildet ist.

8. Tank nach einem oder mehreren der vorhergehenden Ansprüche, **dadurch gekennzeichnet, dass** der erste und/oder zweite Verschluss (78, 82) als Deckel, insbesondere Klappdeckel, ausgebildet ist.

9. Tank nach einem der vorhergehenden Ansprüche, **dadurch gekennzeichnet, dass** der Einfüllbereich (50) und der erste Verschluss (78) rund ausgebildet und die Öffnung (80) exzentrisch zum Mittelpunkt des ersten Verschlusses (78) angeordnet ist.

10. Tank nach einem der vorhergehenden Ansprüche, **dadurch gekennzeichnet, dass** mehrere Anschlüsse (87, 88, 89, 90, 91) vorgesehen sind, die auf einem Teilumfang der Öffnung (80) verteilt angeordnet sind.

11. Tank nach einem der vorhergehenden Ansprüche, **dadurch gekennzeichnet, dass** die Leitungen wenigstens eine Rückführleitung und/oder Spülleitung und/oder Befüllleitung und/oder Spritzleitung eines Spritzensystems umfassen.

12. Landwirtschaftliches Spritzensystem, insbesondere Feldspritze (10), mit einem Tank (20) gemäß einem der vorhergehenden Ansprüche.

## Claims

1. Tank for an agricultural field sprayer (10), having a filling region (50) formed on the tank (20), said filling region having an opening (58) formed on the tank (20), and a first closure (78) terminating the filling region (50), wherein the first closure (78) has an opening (80) provided with a second closure (82), and at least one connection (87, 88, 89, 90, 91) that is connectable to a line, wherein the filling region (50) has a first subregion (62) and at least one second subregion (64), wherein a region of the first subregion (62) is accessible from the opening (80) and is covered by the second closure (82), wherein the second subregion (64) is shielded in the direction of the opening (80) and/or in the direction of the first subregion (62) and is completely covered by the first closure (78), and wherein at least one partition (68) is formed in the filling region (50), said partition separating the first subregion (62) from the at least one second subregion (64) and laterally shielding the first subregion (62) with respect to the second subregion (64), **characterized in that** both the first and the second subregion (62, 64) are accessible from the opening (58) of the filling region (50) and at least one of the connections (90, 91) arranged on the first closure (78) leads into the first subregion (62).

2. Tank according to Claim 1, **characterized in that** the first and/or the second subregion (62, 64) is in the form of a reservoir.

3. Tank according to either of the preceding claims, **characterized in that** the first and/or second subregion (62, 64) has an outflow opening (72, 76) provided with a screen (70) or filter.

4. Tank according to one or more of the preceding claims, **characterized in that** the first and/or the second subregion (62, 64) is in the form of an insert element (92, 94) which is insertable into the filling region (50) and is connectable to the tank (20) and/or the first closure (78).

5. Tank according to one or more of the preceding claims, **characterized in that** the at least one connection (87, 88, 89, 90, 91) leads into one of the subregions (62, 64).

6. Tank according to one or more of the preceding claims, **characterized in that** the first closure (78) is connectable detachably to the tank (20).

7. Tank according to one or more of the preceding claims, **characterized in that** the first and/or second closure (78, 82) is in the form of a bayonet closure.

8. Tank according to one or more of the preceding claims, **characterized in that** the first and/or second closure (78, 82) is in the form of a lid, in particular a hinged lid.

9. Tank according to one of the preceding claims, **characterized in that** the filling region (50) and the first closure (78) are formed in a round manner and the opening (80) is arranged eccentrically with respect to the midpoint of the first closure (78).

10. Tank according to one of the preceding claims, **characterized by** the provision of a plurality of connections (87, 88, 89, 90, 91) which are arranged in a manner distributed around part of the circumference of the opening (80).

11. Tank according to one of the preceding claims, **characterized in that** the lines comprise at least one recirculation line and/or flushing line and/or filling line and/or spray line of a sprayer system.

12. Agricultural sprayer system, in particular field sprayer (10), having a tank (20) according to one of the preceding claims.

## Revendications

1. Cuve pour un pulvérisateur agricole (10), comprenant une région de remplissage (50) réalisée au niveau de la cuve (20), laquelle présente une ouverture (58) réalisée au niveau de la cuve (20), et comprenant une première fermeture (78) fermant la région de remplissage (50), la première fermeture (78) présentant une ouverture (80) pourvue d'une deuxième fermeture (82) et au moins un raccord (87, 88, 89, 90, 91) pouvant être connecté à une conduite, la région de remplissage (50) présentant une première région partielle (62) et au moins une deuxième région partielle (64), une région de la première région partielle (62) étant accessible par l'ouverture (80) et étant recouverte par la deuxième fermeture (82), la deuxième région partielle (64) étant cloisonnée par rapport à l'ouverture (80) et/ou par rapport à la première région partielle (62) et étant complètement recouverte par la première fermeture (78) et au moins une paroi de séparation (68) étant réalisée dans la région de remplissage (50), laquelle paroi de séparation sépare la première région partielle (62) de l'au moins une deuxième région partielle (64) et cloisonnant la première région partielle (62) latéralement par rapport à la deuxième région partielle (64), **caractérisée en ce qu'**à la fois la première et la deuxième région partielle (62, 64) sont accessibles à partir de l'ouverture (58) de la région de remplissage (50) et au moins l'un des raccords (90, 91) disposés sur la première fermeture (78) conduit dans la première région partielle (62).

2. Cuve selon la revendication 1, **caractérisée en ce que** la première et/ou la deuxième région partielle (62, 64) est/sont réalisée(s) sous forme de bassin.

3. Cuve selon l'une quelconque ou plusieurs des revendications précédentes, **caractérisée en ce que** la première et/ou la deuxième région partielle (62, 64) présente(nt) une ouverture de sortie (72, 76) pourvue d'un tamis (70) ou d'un filtre.

4. Cuve selon l'une quelconque ou plusieurs des revendications précédentes, **caractérisée en ce que** la première et/ou la deuxième région partielle (62, 64) est/sont réalisée(s) sous forme d'élément d'insert (92, 94) qui peut être inséré dans la région de remplissage (50) et qui peut être connecté à la cuve (20) et/ou à la première fermeture (78).

5. Cuve selon l'une quelconque ou plusieurs des revendications précédentes, **caractérisée en ce que** l'au moins un raccord (87, 88, 89, 90, 91) conduit dans l'une des régions partielles (62, 64).

6. Cuve selon l'une quelconque ou plusieurs des revendications précédentes, **caractérisée en ce que** la première fermeture (78) peut être connectée de manière détachable à la cuve (20).

7. Cuve selon l'une quelconque ou plusieurs des revendications précédentes, **caractérisée en ce que** la première et/ou la deuxième fermeture (78, 82) est/sont réalisée(s) sous forme de fermeture à baïonnette.

8. Cuve selon l'une quelconque ou plusieurs des revendications précédentes, **caractérisée en ce que** la première et/ou la deuxième fermeture (78, 82) est/sont réalisée(s) sous forme de couvercle, en particulier sous forme de couvercle rabattable.

9. Cuve selon l'une quelconque des revendications précédentes, **caractérisée en ce que** la région de remplissage (50) et la première fermeture (78) sont réalisées sous forme ronde et l'ouverture (80) est disposée de manière excentrique par rapport au centre de la première fermeture (78).

10. Cuve selon l'une quelconque des revendications précédentes, **caractérisée en ce que** plusieurs raccords (87, 88, 89, 90, 91) sont prévus, lesquels sont répartis sur une périphérie partielle de l'ouverture (80).

11. Cuve selon l'une quelconque des revendications précédentes, **caractérisée en ce que** les conduites comprennent au moins une conduite de retour et/ou une conduite de rinçage et/ou une conduite de remplissage et/ou une conduite de pulvérisation d'un système de pulvérisation.

12. Système pulvérisateur agricole, en particulier pulvérisateur (10), comprenant une cuve (20) selon l'une quelconque des revendications précédentes.
